# EUROPÄISCHE PATENTSCHRIFT

(11) **EP 0 523 407 B1**
(45) Veröffentlichungstag und Bekanntmachung des Hinweises auf die Patenterteilung: **10.02.1999**
(21) Anmeldenummer: 92110527.6
(22) Anmeldetag: 23.06.1992
(51) Int. Cl.: G06K 9/64

(54) **Verfahren zur Klassifikation von Signalen**
Signal classification method
Procédé de classification de signaux

(30) Priorität: 03.07.1991 DE 4121870; 10.10.1991 DE 4133590
(43) Veröffentlichungstag der Anmeldung: 20.01.1993
(73) Patentinhaber: ROBERT BOSCH GMBH, 70442 Stuttgart (DE)
(72) Erfinder: Klinnert, Roland, W-7910 Neu-Ulm (DE); Schmidt, Hauke, W-7900 Ulm (DE); Bock, Peter, Prof., Washington DC 20036 (US); Kober, Rudi, W-7938 Oberdischingen (DE)

(56) Entgegenhaltungen:
- INT. WORKSHOP OF NEURAL NETWORKS & THEIR APPLICATIONS 13 November 1989, NEW YORK, NY, XP000093469 P. BOCK ET AL. 'The project ALIAS: an application of collective learning systems theory to an adaptive learning image analysis system'
- ZEITSCHRIFT FÜR ANGEWANDTE MATHEMATIK UND PHYSIK Bd. 21, Nr. 5, 25 September 1970, BASEL, CH, Seiten 850 - 852, XP002064689 C. SEQUIN ET AL. 'Ein Multistabiles Gewichtselement für lernfähige Systems'
- WISS. BER. AEG-TELEFUNKEN Bd. 52, Nr. 1/2, 01 Februar 1979, Seiten 31 - 38, XP002041702 J. SCHÜRMANN 'Zur Zeichen- und Worterkennung beim automatischen Anschriftenlesen'

## Beschreibung

Die Erfindung geht aus von einem Verfahren zur Klassifikation von Signalen nach der Gattung des Hauptanspruchs.

Auf vielen Gebieten der Wissenschaft und der Technik ist eine Klassifikation von reellwertigen Signalen in eine oder mehrere Klassen erforderlich. Die Signale können dabei eindimensional sein, wie beispielsweise akustische Signale und zeitabhängige Meßgrößen jeglicher Art. Zweidimensionale Signale sind Funktionen von zwei Variablen, insbesondere Kamerabildern, Bildsequenzen, Projektionen, beispielsweise akustischer Signale als Sonogramme. Schließlich ist die Klassifikation von n-dimensionalen Signalen möglich, die Funktionen von n Variablen darstellen.

Die bisherigen Vorschläge zur Klassifikation von Signalen richten sich oft auf Binärsignale, das heißt, Signale die lediglich zwei Zustände einnehmen können, wie beispielsweise Schwarz-Weiß-Darstellungen. Ein derartiges System ist durch den Forschungsbericht "Project ALIAS - Phase I Final Report" des Forschungsinstituts für anwendungsorientierte Wissensverarbeitung, Ulm, 16.05.1990, bekanntgeworden und extrahiert in mehreren parallelen Kanälen Merkmale aus zugeführten Binärsignalen.

Bei der Klassifikation von Bildern mit mehreren Graustufen wird daher häufig vor der eigentlichen Klassifizierung ein Vergleich mit einem Schwellwert durchgeführt, um Binärbilder zu erzeugen, wobei jedoch häufig wichtige Informationen verlorengehen.

Bei einem anderen bekannten System zur Klassifizierung von Mustern (EP 0 191 407 A2) sind mehrere Kanäle zur Klassifikation vorgesehen, deren Ausgangssignale zu einem Klassifikationsergebnis kombiniert werden. In den einzelnen Kanälen werden die zu klassifizierenden Signale mit Prototypen verglichen, die jeweils ihre Klasse in einer Hyperkugel um ihre Position im Merkmalsraum repräsentieren. Der Radius dieser Hyperkugel wird mit einem Lernalgorithmus adaptiert. Nach einer Trainingsphase werden Merkmalsvektoren aus Testsignalen derjenigen Klasse zugeordnet, der auch der Prototyp angehört, in dessen Hyperkugel sie fallen. Dabei wird die Klassifikation durch ein Abstandsmaß bestimmt, nämlich durch den Abstand von dem Eingangsmerkmalsvektor zu dem Prototypvektor. Weitreichende Überlappungen verschiedener Klassen im Merkmalsraum führen im Überschneidungsbereich zu einer Vielzahl von Prototypen mit sehr kleinen Einflußgrößen, die zu großen Problemen bei der Generalisierungsfähigkeit des Systems führen können. Außerdem sind zur Bestimmung der Prototypen mehrere Durchläufe in der Trainingsphase erforderlich.

Aus der Druckschrift "THE PROJECT ALIAS: An Application of collective learning systems theory to an adaptive learning image analysis system", in International Workshop of Neural Networks & Their Applications, 13. bis 16. November 1989, New York, ist unter dem Hinweis auf das Projekt Alias ein Verfahren beschrieben, das dazu dient, anormale Dinge in einem Bild zu entdecken. Aus hochaufgelösten Bildern wird eine Gruppe von reduzierten Bildern mit unterschiedlichen Rängen der Auflösung erstellt. Während eines Lernvorganges wird durch Alias eine Normalhypotese für jedes reduzierte Bild gelernt. Diese Normalhypotese wird von Alias genutzt, um den Ort ohne den Umfang der Anomalie abzuschätzen. Während des überwachten Lernens wird die Genauigkeit der Abschätzung den Lernzellen mitgeteilt, die diese Bewertung dazu nutzen, um ihre Normalhypotese zu verbessern.

Aus dem Artikel "Ein multistabiles Gewichtselement für lernfähige Systeme, Zeitschrift für angewandte Mathematik und Physik, Band 21, Nr. 5, 25. September 1970, Seiten 850 bis 852 ist ein Gewichtungselement für lernfähige Systeme beschrieben, das dazu dient, Gewichtungen mittels Zähler zu realisieren. Aus der Druckschrift Wissenschaftliche Berichte der AEG Telefunken, 52 (1979), Seite 31 bis 38, ist der Artikel, "Zur Zeichen- und Worterkennung beim automatischen Anschriftenlesen (1)" bekannt, indem u. a. ein Rasterbild über mehrere Kanäle gleichzeitig bearbeitet wird, um beispielsweise Großbuchstaben, Kleinbuchstaben und Ziffern schneller erkennen und auswerten zu können.

Aufgabe der vorliegenden Erfindung ist es, ein Verfahren zur Klassifikation von Signalen, welche jeweils einen von mehreren möglichen Amplitudenverläufen, von aufgenommenen Signalen darstellt, anzugeben, das an verschiedene Aufgaben leicht anzupassen ist und das sich durch möglichst einfache Lernvorgänge auszeichnet.

Diese Aufgabe wird durch ein Verfahren mit den im Anspruch 1 angegebenen Merkmalen gelöst.

Die von dem erfindungsgemäßen Verfahren klassifizierten Signale können von einem Sensor, beispielsweise von einer Videokamera, oder von mehreren Sensoren, die den gleichen Vorgang beobachten, erzeugt werden. Das erfindungsgemäße System eignet sich insbesondere zur Lösung von Mustererkennungsaufgaben bei mehrdimensionalen Signalen. Es ist in der Lage, anhand von als gut befundenen Trainingsbeispielen deren typische Merkmale selbstständig zu extrahieren und zu erlernen. Nach Abschluß des Trainingsvorgangs kann es bei beliebigen Signalbeispielen klassenfremde Merkmale bzw. fehlerhafte Muster erkennen. Es ist möglich, ein für das erfindungsgemäße Verfahren ausgelegtes System mit nur einer oder auch mit mehreren Klassen zu trainieren, wobei je Klasse und je Kanal eine Tabelle angelegt wurde.

Die Auftrittswahrscheinlichkeiten, die in der Tabelle gespeichert sind, entsprechen nicht unbedingt den exakten zuvor ermittelten Werten für die Auftrittswahrscheinlichkeiten. Die gespeicherten Werte brauchen lediglich eine monotone Funktion der Auftrittswahrscheinlichkeit darzustellen.

Eine Weiterbildung des erfindungsgemäßen Verfahrens besteht darin, daß bei der Verwendung von mehreren Kanälen vor der weiteren Auswertung die aus den Tabellen aller Kanäle ausgelesenen Auftrittswahrscheinlichkeiten miteinander verknüpft werden. Hierdurch wird eine Erweiterung der Anwendungsmöglichkeit des erfindungsgemäßen Verfahrens gegeben.

Das erfindungsgemäße Verfahren kann derart durchgeführt werden, daß die Proben um a Abtastperioden gegeneinander versetzt sind, wobei a zwischen 1 und der Anzahl der zeitlich aufeinander folgenden zu einer Probe gehörenden Abtastwerte liegt. Die Wahl der Größe der Proben als auch des Versatzes a erlaubt eine Anpassung des erfindungsgemäßen Verfahrens an die verschiedenartigsten Aufgaben.

Eine andere Weiterbildung des erfindungsgemäßen Verfahrens besteht darin, daß jeweils in einem Kanal mehrere Merkmale extrahiert werden, die gemeinsam eine Adresse für die Tabelle bilden. Hierdurch ist es in einfacher Weise möglich, Verbundwahrscheinlichkeiten des Auftretens der extrahierten Merkmale zu berücksichtigen. Bei einer praktischen Realisierung des erfindungsgemäßen Verfahrens kommt diese Weiterbildung ferner der Struktur von digitalen Signalverarbeitungssystemen entgegen, welche beispielsweise mit einem Adressenraum von 16 Binärstellen arbeiten. Da eine feinere Quantisierung der Merkmale häufig nicht erforderlich oder sinnvoll ist, wird durch die Bildung einer gemeinsamen Adresse für mehrere Merkmale der vorgenannte Adressenraum günstig ausgenutzt.

Eine weitere Erhöhung der Flexibilität des erfindungsgemäßen Verfahrens ist dadurch möglich, daß die Adresse ferner eine Zusatzinformation enthält, die nicht durch Extrahieren von Merkmalen aus der Probe gewonnen wurde. Die Zusatzinformation kann beispielsweise Angaben über die Kombination und/oder Bewertung der in der gleichen Adresse enthaltenen Merkmale, über Umstände bei der Erzeugung der Signale und/oder über den inneren Zustand des Klassifikators umfassen. Ferner kann die Zusatzinformation aus nachfolgenden Verarbeitungsschritten gewonnen werden.

Vorzugsweise kann bei dem erfindungsgemäßen Verfahren vorgesehen sein, daß in den einzelnen Kanälen die Verarbeitung mit verschieden großen Proben und/oder mit der Extraktion unterschiedlicher Merkmale erfolgt. Mit diesen Unterschieden zwischen den einzelnen Kanälen ist die Bearbeitung vielfältiger Klassifikationsaufgaben möglich. Es sind jedoch auch andere Unterschiede zwischen den einzelnen Kanälen möglich. Den Kanälen können auch Signale verschiedener Sensoren zugeführt werden, die den gleichen Vorgang bzw. das gleiche Objekt beobachten.

Eine andere Weiterbildung des Verfahrens besteht darin, daß zur Verknüpfung der aus den Tabellen ausgelesenen Auftrittswahrscheinlichkeiten zunächst die jeweils aus den Merkmalen zeitlich oder örtlich korrespondierender Proben gewonnenen Auftrittswahrscheinlichkeiten verschiedener Kanäle miteinander verknüpft werden und daß aus allen verknüpften Auftrittswahrscheinlichkeiten eine Entscheidungsgröße berechnet wird, die mit einem Schwellwert verglichen wird. Hierdurch ist eine besonders günstige Kombination der Ergebnisse der einzelnen Kanäle gegeben.

Um störende Signalanteile zu unterdrücken, kann vorgesehen sein, daß die Signale vor der Merkmalsextraktion oder daß die aus der Tabelle ausgelesenen Auftrittswahrscheinlichkeiten gefiltert werden.

Eine vorteilhafte Ausführungsform des Verfahrens, wobei die Abtastwerte Eigenschaften (Grauwert, gegebenenfalls Farbe) von Bildelementen eines Bildes darstellen, besteht darin, daß eine Probe jeweils m x n Bildelemente umfaßt und daß die Proben zeilenweise fortschreitend entnommen werden, wobei der Versatz von einer Probe auf die folgende in Zeilenrichtung zwischen einem und m Bildelementen und der Versatz senkrecht zur Zeilenrichtung zwischen 1 und n Bildelementen liegt.

Mit dieser Ausführungsform ist die Klassifikation verschiedenartiger Bildvorlagen möglich. So können beispielsweise im Rahmen einer Qualitätskontrolle Oberflächen von industriellen Erzeugnissen automatisch überprüft werden, wobei Anomalitäten, wie beispielsweise Kratzer, erkannt werden. Vorzugsweise ist bei dieser Ausführungsform m = n, was eine quadratische Probe bedeutet.

Als zu extrahierende Merkmale eignen sich insbesondere: Mittelwert, Aktivität (Summe der Absolutwerte der Differenzen zwischen allen zu der Probe gehörenden unmittelbar benachbarten Abtastwerten), Moment, Gradient (nach Betrag und Winkel), Texturen, Varianzen, fraktale Dimensionen, Ableitungen, relative und/oder absolute Positionen der Probe, zeitliche und/oder örtliche Kombinationen (beispielsweise Differenzen) mit mindestens einer anderen Probe.

Bei der Extraktion von Merkmalen treten regelmäßig Werte mit relativ hohen Genauigkeiten bzw. einer hohen Anzahl von Binärstellen auf. Benutzt man derartige Werte als Adressen für die Tabelle der Auftrittswahrscheinlichkeiten, so wird beim Lernvorgang aus statistischen Gründen eine sehr große Anzahl von verschiedenen Proben und verschiedenen Signalen benötigt, damit unter jeder einzelnen Adresse der Tabelle ein zuverlässiger Wert für die Auftrittswahrscheinlichkeit abgelegt werden kann. Um die Zahl der verschiedenen Proben bzw. Signale demgegenüber deutlich zu vermindern, ist gemäß einer Weiterbildung der Erfindung vorgesehen, daß die Merkmale zur Bildung der jeweiligen Adresse skaliert und/oder quantisiert werden.

Hierbei wird unter Quantisieren eine Einteilung des jeweiligen Merkmals in gröbere Quantisierungsstufen verstanden, was im einfachsten Fall durch Fortlassen geringwertiger Binärstellen erfolgen kann. Beim Skalieren kommen im wesentlichen nichtlineare Kennlinien zur Anwendung, so daß beispielsweise ein größerer Teil des Wertebereichs eines Merkmals zu einer einzigen Adresse führt, während der restliche Wertebereich durch die restlichen möglichen Werte quantisiert wird.

Das erfindungsgemäße Verfahren arbeitet vollständig translationsinvariant. Das heißt, daß die Ermittlung der Auftrittswahrscheinlichkeit eines Musters nicht von der Lage des Musters im Signal abhängt. Diese Invarianz kann teilweise oder vollständig aufgehoben werden, indem die absolute oder zu einem Bezugspunkt relative Lage des Musters als Merkmal mit aufgenommen wird.

Hierzu kann bei der Klassifizierung von Bildern mit dem erfindungsgemäßen Verfahren eine in der Adresse enthaltene Zusatzinformation insbesondere dadurch in vorteilhafter Weise genutzt werden, daß die Zusatzinformation eine Angabe über den Ort der jeweiligen Probe innerhalb des Bildes enthält.

Ein vorteilhafter Lernvorgang im Rahmen des erfindungsgemäßen Verfahrens besteht darin, daß in einem Lernvorgang Signale zugeführt werden, die in die jeweils zu lernende Klasse fallen, und daß folgende Verarbeitungsschritte in einem Kanal oder in mehreren Kanälen parallel erfolgen:
- aus jeweils mehreren Abtastwerten werden Proben gebildet,
- aus jeder Probe wird mindestens ein Merkmal extrahiert,
- das Merkmal bzw. die Merkmale jeder Probe werden als Adressen verwendet, um beim Auftreten eines Merkmals einen zuvor unter der dem Merkmal entsprechenden Adresse abgelegten Wert zu inkrementieren.

Dabei kann vorgesehen sein, daß eine nichtlineare Bewertung der Häufigkeitsverteilung erfolgt und/oder daß bei der Inkrementierung Merkmale weiterer Proben berücksichtigt werden.

Eine andere Weiterbildung der Erfindung besteht darin, daß die aus der Tabelle ausgelesenen und/oder die verknüpften Auftrittswahrscheinlichkeiten auf einem Bildschirm dargestellt werden. Eine solche Darstellung kann zur Verifizierung der durchgeführten Klassifikation herangezogen werden, da sie anzeigt, welche Bereiche wie zu der getroffenen Entscheidung beigetragen haben. Hierdurch ergibt sich ein weiterer Vorteil gegenüber anderen lernenden Verfahren, die meist keine lokalisierte Verifizierung der Entscheidung zulassen.

Ausführungsbeispiele der Erfindung sind in der Zeichnung anhand mehrerer Figuren dargestellt und in der nachfolgenden Beschreibung näher erläutert. Es zeigt:
- Fig. 1: eine schematische Darstellung des erfindungsgemäßen Verfahrens,
- Fig. 2: eine Darstellung eines Kanals bei der Klassifikation von Signalen als Blockschaltbild,
- Fig. 3: einen Kanal beim Lernvorgang als Blockschaltbild,
- Fig. 4: ein Ausführungsbeispiel für eine Kombination der Ergebnisse verschiedener Kanäle ebenfalls als Blockschaltbild,
- Fig. 5: mehrere Schirmbilder mit Ergebnissen verschiedener Verfahrensschritte für ein erstes zu klassifizierendes Bild,
- Fig. 6: mehrere Schirmbilder bei der Klassifikation eines weiteren Bildes und
- Fig. 7: mehrere Schirmbilder bei der Anwendung des erfindungsgemäßen Verfahrens zur industriellen Qualitätskontrolle.

Gleiche Teile sind in den Figuren mit gleichen Bezugszeichen versehen.

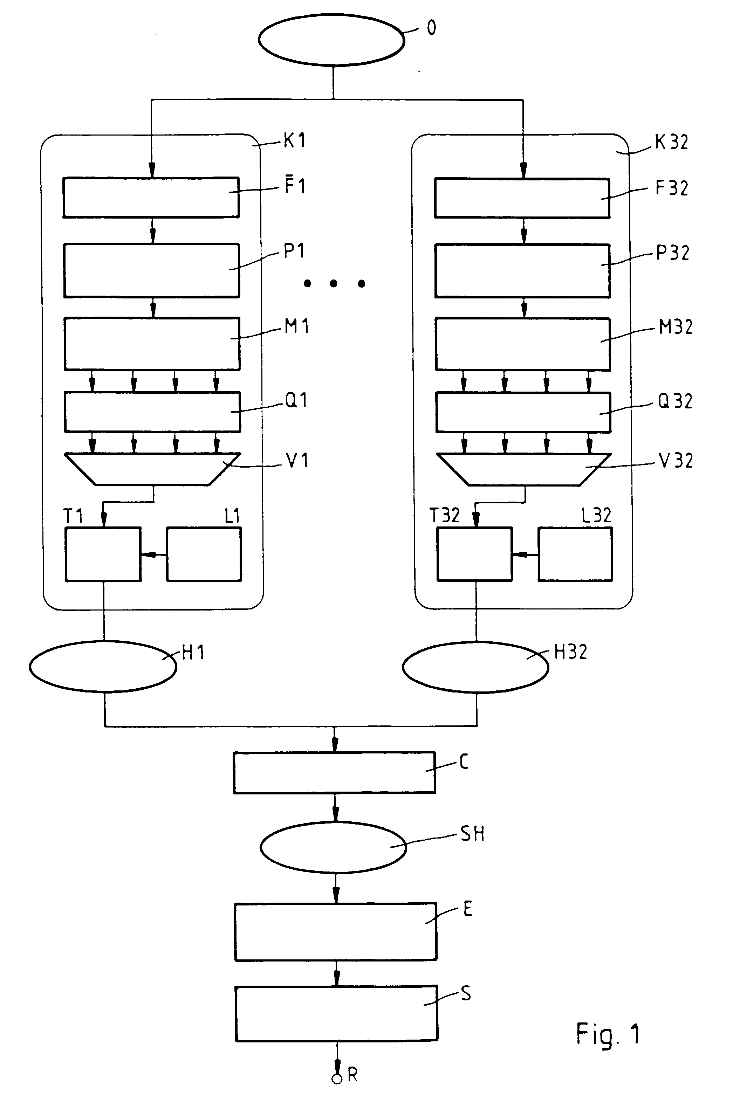

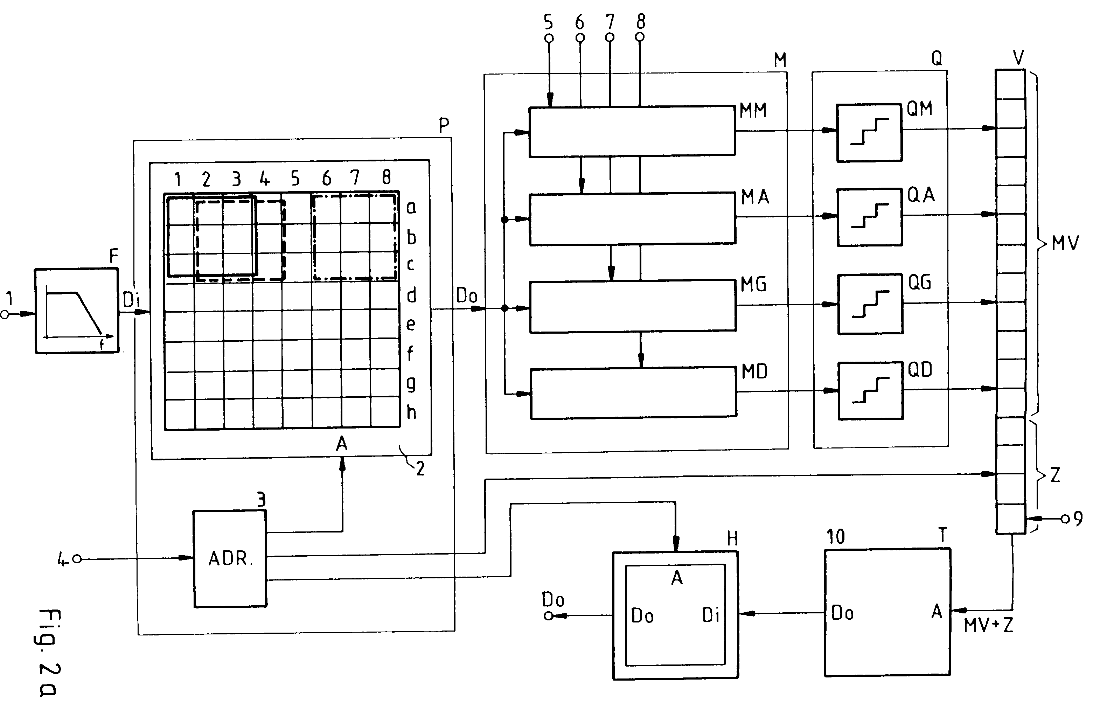

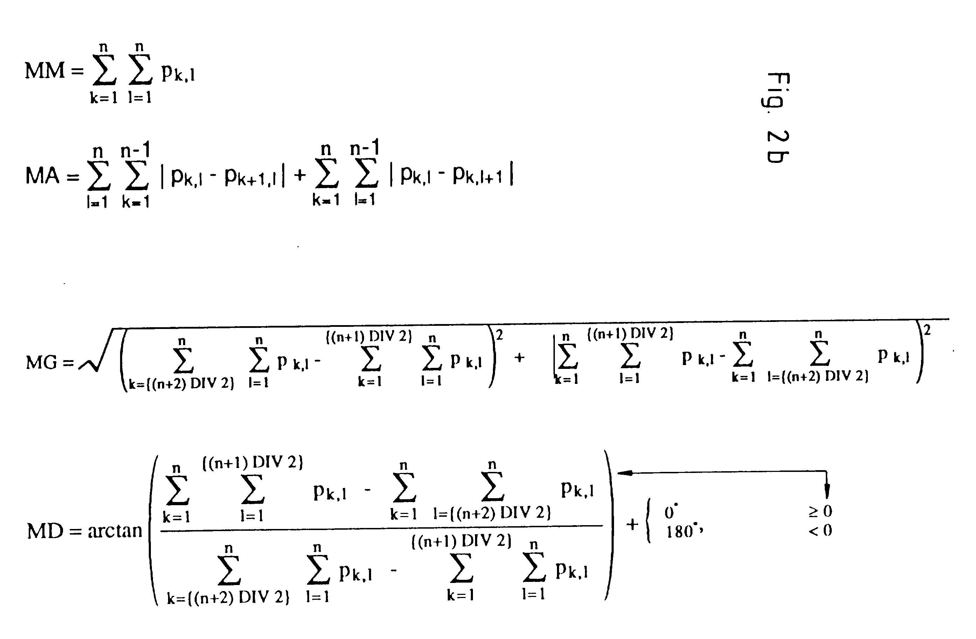

Zur Durchführung des erfindungsgemäßen Verfahrens eignen sich vorzugsweise Rechner mit einer entsprechenden Leistungsfähigkeit. Wegen der relativ großen Anzahl von teilweise parallel durchzuführenden Operationen können vorzugsweise mehrere Rechner, Prozessoren, Transputer und dergleichen angewendet werden. Die in Fig. 1 vorgenommene Darstellung des erfindungsgemäßen Verfahrens kann daher als Vorschlag für ein geeignetes Programm oder als Beispiel für eine Struktur aus einzelnen Schaltungsbaugruppen angesehen werden. Im Sinne einer anschaulichen Darstellung sind die Figuren 2 bis 4 an sich auf Schaltungen gerichtet. Einem Fachmann auf dem Gebiet der Datenverarbeitung ist es jedoch ohne weiteres möglich, nach Maßgabe dieser Schaltungen geeignete Rechnerprogramme zu entwickeln.

Das in Fig. 1 dargestellte Verfahren geht von einem Originalbild O aus, das beispielsweise bereits in digitaler Form vorliegt und 256 x 256 Bildelemente enthält, deren Grauwerte jeweils durch ein 8-Bit-Datenwort dargestellt werden. Zur Signalverarbeitung sind 32 Kanäle K1 bis K32 vorgesehen, wobei je nach Aufgabenstellung auch eine geringere oder höhere Anzahl von Kanälen benutzt werden kann. Am Eingang eines jeden Kanals ist eine Filterung F1 bis F32 vorgesehen, mit der für die Klassifizierung ungeeignete Bestandteile des Originalbildes O unterdrückt werden. Im einzelnen können beispielsweise vorgegebene Frequenzen, insbesondere durch einen Tiefpaß, unterdrückt werden oder eine Unterabtastung erfolgen. Häufig kann auch eine Fensterung vorgesehen sein, bei welcher nur die innerhalb eines vorgegebenen Fensters liegenden Bildelemente zur weiteren Verarbeitung herangezogen werden. Nach der Filterung erfolgt eine Bildung von Proben P1 bis P32. Einzelheiten hierzu sind im Zusammenhang mit Fig. 2 näher erläutert. Aus jeweils einer Probe werden bei M1 bis M32 z. B. vier Merkmale extrahiert.

Um eine zu große Anzahl von Adressen zu vermeiden, werden die Merkmale bei Q1 bis Q32 quantisiert, beispielsweise durch Fortlassen mehrerer geringwertiger Binärstellen. Die einzelnen quantisierten Merkmale werden bei V1 bis V32 zu einem Merkmalsvektor zusammengesetzt. Dieser wird einer Tabelle T1 bis T32 als Adresse zugeführt, in welcher zuvor für jeden Merkmalsvektor eine Auftrittswahrscheinlichkeit innerhalb eines Lernvorgangs L1 bis L32 eingeschrieben wurde.

Die jeweils für ein Bild ausgelesenen Auftrittswahrscheinlichkeiten liegen als Matrix entsprechend den Ursprüngen der einzelnen Proben vor und bilden jeweils eine Hypothese H1 bis H32. Diese werden in einem weiteren Verfahrensschritt C kombiniert und bilden eine Superhypothese SH. Aus dieser wird in einem weiteren Schritt E eine Entscheidungsgröße berechnet, die anschließend bei S mit einem Schwellwert verglichen wird. Das Ergebnis steht bei R als Aussage über die Klassenzugehörigkeit zur Verfügung.

Fig. 2a zeigt einen der Kanäle K1 bis K32 etwas detaillierter als Fig. 1 in Form eines Blockschaltbildes. An einen Eingang 1 schließt sich ein Filter F (hier als Tiefpaßfilter ausgebildet) an, dessen Ausgang mit einer Schaltung P zur Zerlegung des Eingangsbildes in Proben verbunden ist. Die Schaltung P besteht im wesentlichen aus einem Schreib-Lese-Speicher 2 mit einem Dateneingang DI und einem Datenausgang DO sowie aus einem Adressengenerator 3, der durch bei 4 zugeführte Signale programmierbar ist. Der Eingang 4 sowie die weiteren Eingänge 5 bis 9 dienen zur Zuführung von Steuersignalen, die von einer nicht dargestellten Steuereinheit abgegeben werden und den einzelnen Schaltungen in Abhängigkeit von der jeweiligen Aufgabe und dem jeweiligen Betriebszustand unterschiedliche Funktionen zuweisen.

Der Schreib-Lese-Speicher 2 umfaßt an sich eine Kapazität von 256 x 256 Abtastwerten. Der Übersichtlichkeit halber sind in Fig. 2a lediglich Speicherplätze für 8 x 8 Abtastwerte dargestellt. Zum Einschreiben des gefilterten Originalbildes wird der Adressengenerator derart gesteuert, daß die Adresse für den Schreib-Lese-Speicher 2 zeilenweise inkrementiert wird, also a1, a2, ... a8, b1, b2, ... h8.

Zur Bildung der Proben wird jedoch der Adressengenerator 3 derart programmiert, daß die Abtastwerte jeweils einer Probe nacheinander über den Datenausgang DO ausgelesen und der nachfolgenden Schaltung M zugeführt werden. Bei einer Probe von 9 Bildelementen, wie es in Fig. 2a dargestellt ist, beginnt das Auslesen mit dem Bildelement a1, worauf a2 und a3, dann die Bildelemente b1, b2 und b3 und dann schließlich die Bildelemente c1, c2 und c3 folgen. Ist die Probe mit diesen Bildelementen in der nachfolgenden Schaltung M verarbeitet, dann wird eine Probe mit den gestrichelt umrandeten Bildelementen ausgelesen. Weitere Proben folgen, bis die strichpunktierte Probe ausgelesen ist. Darauf folgt eine weitere Reihe von Proben, ausgehend von dem Bildelement b1. Das linke obere Bildelement einer Probe wird im folgenden Ursprung der Probe genannt. Wie bereits erwähnt, können bei dem erfindungsgemäßen Verfahren in den verschiedenen Kanälen verschieden große Proben verarbeitet werden. Es können jedoch auch verschiedene Schrittweiten von Probe zu Probe vorgesehen sein.

Bei dem Ausführungsbeispiel nach Fig. 2a enthält die Schaltung M vier Recheneinheiten, welche über die Eingänge 5 bis 8 programmiert werden können. Die Recheneinheit MM hat bei dem dargestellten Beispiel die Funktion einer Mittelwertbildung der Abtastwerte jeweils einer Probe, die Recheneinheit MA dient zur Berechnung der Aktivität innerhalb der Probe, Recheneinheit MG bildet den Betrag und die Recheneinheit MD die Richtung des Gradienten innerhalb der Probe. Die Gleichungen, die in den jeweiligen Recheneinheiten abgearbeitet werden, sind in Fig. 2b angegeben.

Die Ergebnisse der Merkmalsextraktion werden in der Schaltung Q quantisiert. Je nach Art und Bedeutung der einzelnen Merkmale kann eine verschieden feine Quantisierung vorgenommen werden. Die Ergebnisse werden bei V zu einem Merkmalsvektor MV zusammengesetzt. In dem Beispiel sind die Merkmale Mittelwert, Aktivität, Betrag des Gradienten und Winkel des Gradienten jeweils mit drei Binärstellen quantisiert, so daß vier Binärstellen von insgesamt 16 für eine Zusatzinformation verbleiben. Diese wird bei dem in Fig. 2 dargestellten Ausführungsbeispiel einerseits dazu genutzt, dem Merkmalsvektor eine Ortsinformation hinzuzufügen, was durch den Adressengenerator 3 erfolgt. Außerdem kann von der nicht dargestellten Steuereinheit über einen Eingang 9 eine Binärstelle der Zusatzinformation beliebig gesetzt werden.

Der Merkmalsvektor MV mit der Zusatzinformation Z wird als Adresse einem Schreib-Lese-Speicher 10 zugeführt, in welchem für jede Adresse MV + Z ein Wert abgelegt ist, der in einem Lernvorgang aus der Auftrittswahrscheinlichkeit des jeweiligen Merkmalsvektors MV ermittelt wurde. Dieser Wert kann direkt die Auftrittswahrscheinlichkeit darstellen, kann jedoch auch durch eine monotone Funktion von dieser abgeleitet sein. Dieser Wert wird im folgenden als Normalität bezeichnet, da er ein Maß dafür darstellt, inwieweit der jeweilige Merkmalsvektor MV für ein während des Lernvorgangs zugeführtes Bild "normal" ist.

Für jede Probe wird in Abhängigkeit von der zugehörigen Adresse MV + Z aus dem Schreib-Lese-Speicher 10 eine Normalität ausgelesen und in einen weiteren Schreib-Lese-Speicher H unter einer Adresse abgelegt, welche dem Ursprung der Probe entspricht. Diese Adresse wird dem Adresseneingang A des Schreib-Lese-Speichers H vom Adressengenerator 3 zugeführt. Am Ausgang DO des Schreib-Lese-Speichers H können bei einer entsprechenden zeilenweisen Adressierung die Normalitäten N zeilenweise abgerufen werden.

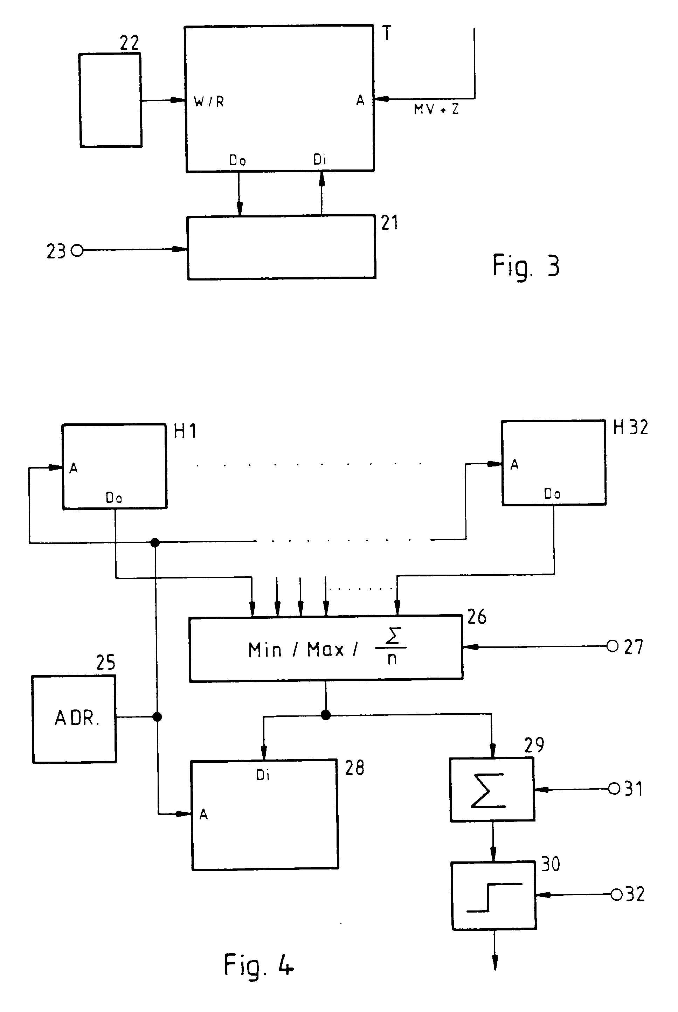

Bevor auf die weitere Verarbeitung der Hypothese bzw. der Hypothesen bei der Benutzung mehrerer Kanäle eingegangen wird, erfolgt eine Erläuterung eines Beispiels für den Lernvorgang anhand von Fig. 3, wobei lediglich die Teile eines Kanals dargestellt sind, die beim Lernvorgang zusätzlich vorhanden sind oder anders als bei der Klassifikation gesteuert werden. Die Erzeugung des Merkmalsvektors MV und der Zusatzinformation Z geschieht in gleicher Weise wie bei der Klassifikation selbst. Auf die Darstellung der Schaltungen F, P, M, Q und V wurde daher verzichtet. Ein Speicher für die Hypothese H ist beim Lernvorgang nicht erforderlich.

Außer dem Schreib-Lese-Speicher T für die Normalitäten ist bei der Anordnung nach Fig. 3 ein Rechenwerk 21 und eine Steuereinrichtung 22 vorhanden, die eine Umschaltung des Schreib-Lese-Speichers T zwischen einem Schreib- und einem Lesemodus (W/R) vornimmt. Vor Beginn des Lernvorgangs wird der Inhalt des Schreib-Lese-Speichers gelöscht. Sobald für eine Probe eine Adresse MV + Z vorliegt, wird der Inhalt der entsprechenden Zelle des Schreib-Lese-Speichers T ausgelesen und vom Rechenwerk entsprechend einer zuvor einem Steuereingang 23 zugeführten Anweisung verändert. Diese Veränderung besteht im einfachsten Fall aus einer Inkrementierung, so daß die Normalität direkt proportional zur Häufigkeit des Auftretens der entsprechenden Adresse ist.

Das Rechenwerk kann jedoch auch andere Funktionen anwenden, insbesondere nichtlineare. Das Ergebnis der Rechnung wird unter der gleichen Adresse wieder in den Schreib-Lese-Speicher T eingeschrieben. Danach wird die aus der nächsten Probe gewonnene Adresse zugeführt und die zuvor gespeicherte Normalität entsprechend geändert.

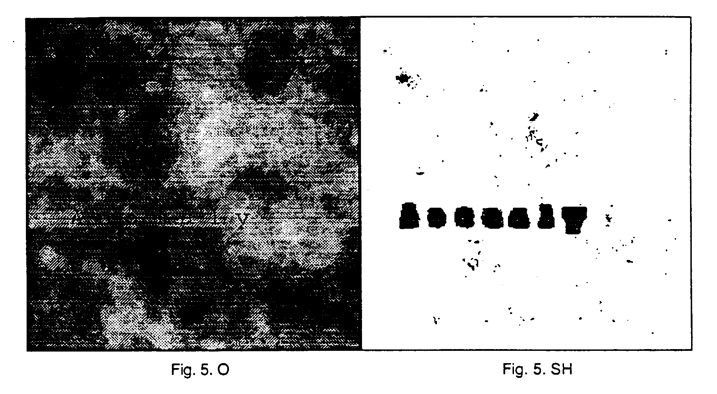

Im folgenden wird anhand von Fig. 4 ein Beispiel für die Verknüpfung der in den einzelnen Kanälen gewonnenen Hypothesen zu einer Superhypothese, für die Berechnung eines Entscheidungswertes und für die Auswertung des Entscheidungswertes erläutert. Die Hypothesen der einzelnen Kanäle werden aus Schreib-Lese-Speichern H1 bis H32 ausgelesen, in welche sie zuvor gemäß Fig. 2 eingeschrieben wurden. Zur Erzeugung der Adressen dient ein Adressengenerator 25, der gleiche Adressen zu den Adresseneingängen A der Schreib-Lese-Speicher H1 bis H32 leitet. Dadurch liegen gleichzeitig örtlich korrespondierende Normalitätswerte an Eingängen einer Recheneinheit 26, die über einen Steuereingang 27 zur Durchführung verschiedener Berechnungen programmierbar ist. So kann beispielsweise der Minimalwert oder der Maximalwert oder der Mittelwert der zugeführten Normalitäten gebildet werden. Das Ergebnis wird einerseits in einen weiteren Schreib-Lese-Speicher 28 unter Verwendung der gleichen Adressen eingeschrieben und steht dort beispielsweise zum Auslesen für eine Bildschirmdarstellung zur Verfügung.

Zur Bildung eines Entscheidungswertes werden bei dem Ausführungsbeispiel nach Fig. 4 die Ausgangswerte der Recheneinheit 26 in einer weiteren Recheneinheit 29 jeweils über ein Bild aufsummiert. Damit wird ein Entscheidungswert gebildet, der einer Schwellwertschaltung 30 zugeführt wird. Sowohl die Recheneinheit 29 als auch die Schwellwertschaltung 30 können über Steuereingänge 31, 32 gesteuert werden.

Umso mehr Merkmale eines zu klassifizierenden Bildes in den beim Lernen entstandenen "Merkmalsbereich" fallen, umso mehr Normalitäten der Hypothesen und der Superhypothese nehmen größere Werte im Bereich ihres oberen Grenzwertes an. Dementsprechend wird deren Summe, also der Entscheidungswert größer. Durch eine für den jeweiligen Anwendungsfall festzulegende Schwelle kann dann unterschieden werden, ob das zu klassifizierende Bild in die gelernte Klasse fällt oder nicht. Am Ausgang R steht dann ein entsprechendes digitales Signal zur Verfügung.

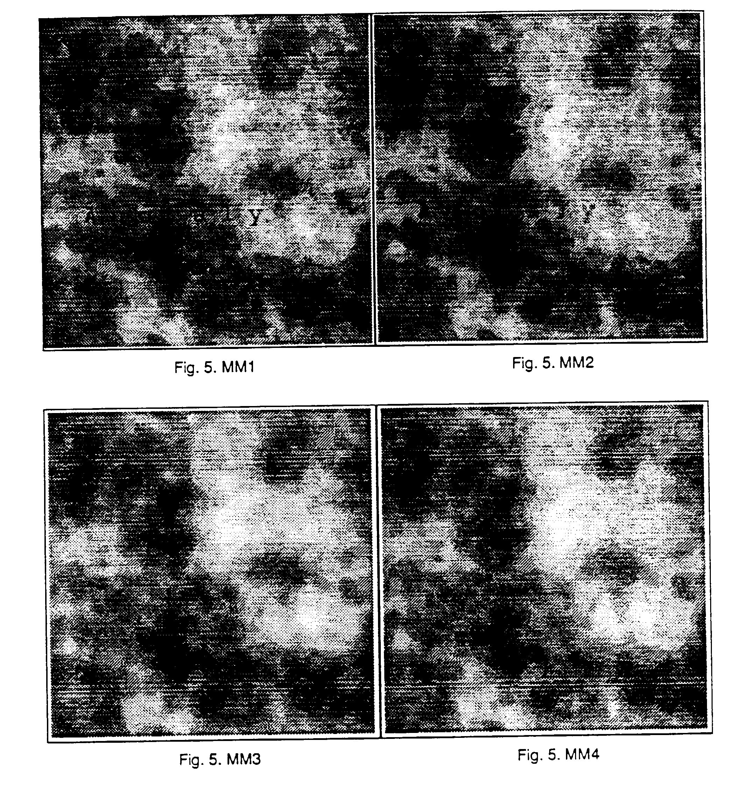

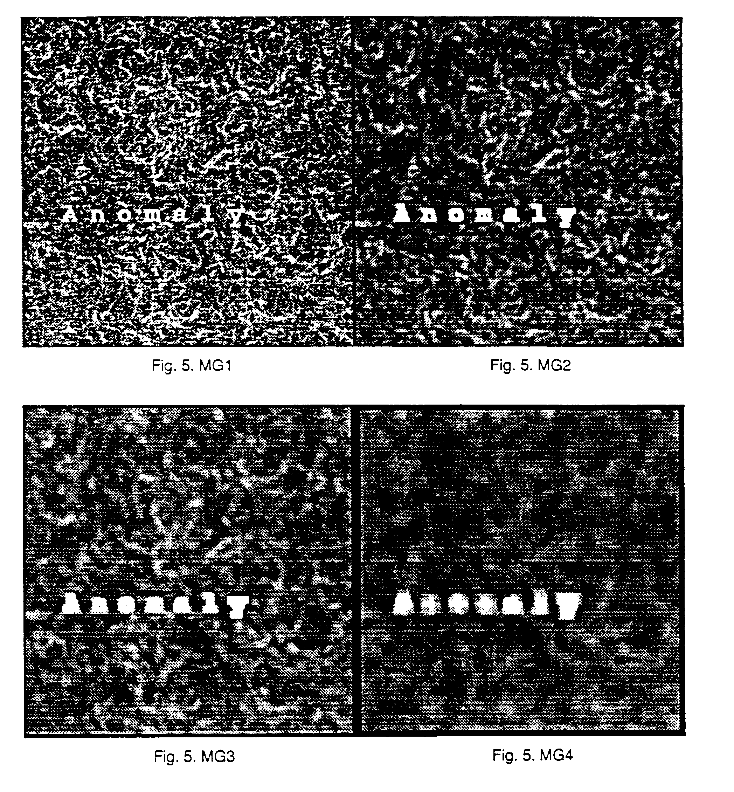

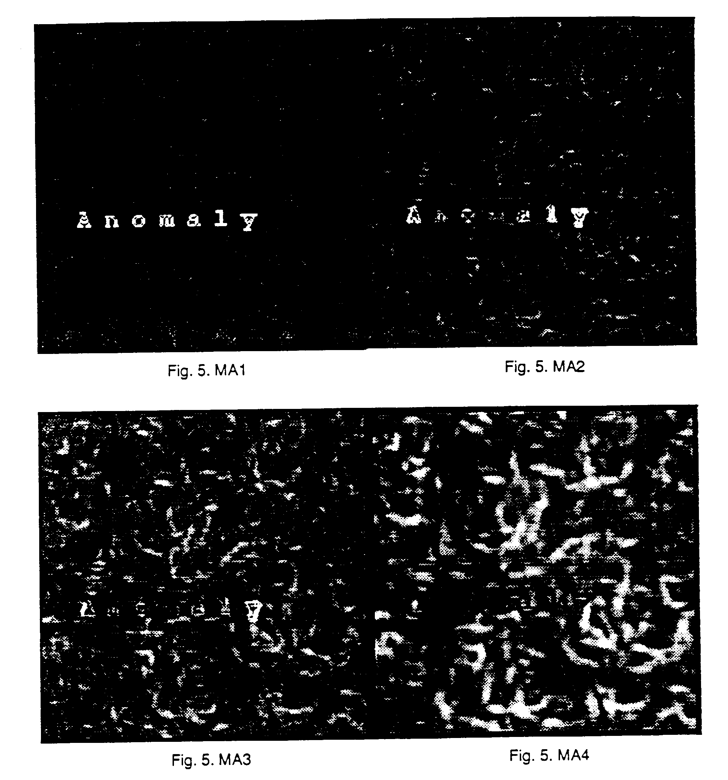

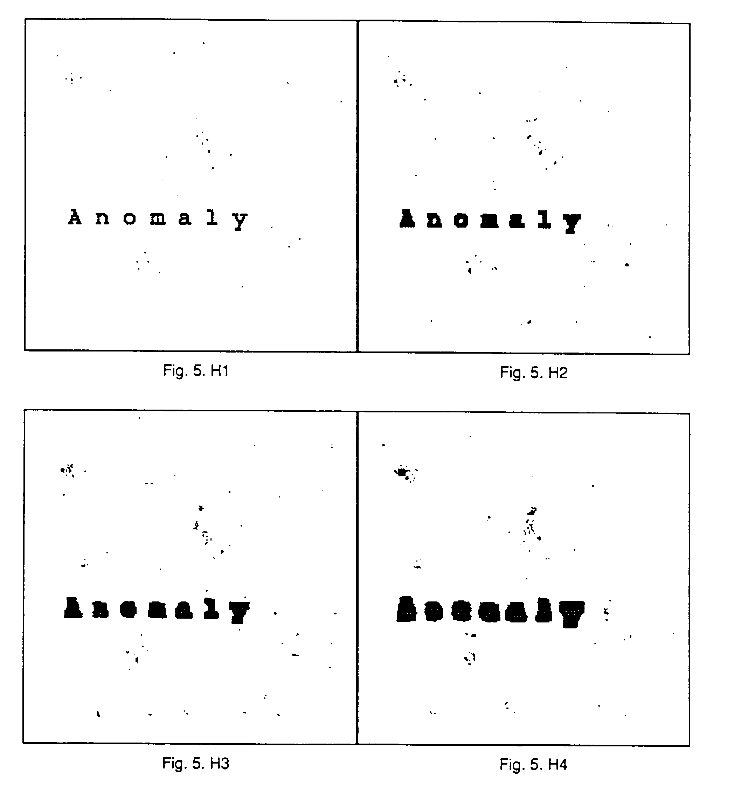

Fig. 5 zeigt anhand mehrerer Schirmbilder die bei den verschiedenen Verarbeitungsschritten entstehenden Signale unter folgenden Voraussetzungen: Bei einem vorangehenden Lernvorgang wurden Fraktale gelernt, da sich derartige Bilder gut für Versuchs- und Demonstrationszwecke eignen. Es wurden vier Kanäle benutzt, wobei in jedem Kanal die Merkmale Mittelwert, Aktivität und Betrag des Gradienten extrahiert wurden. Die Schrittweite bei der Bildung von Proben betrug in allen Kanälen 1, während die Größe der Probe von Kanal zu Kanal unterschiedlich ist. Die einzelnen Bilder sind entsprechend den Verfahrensschritten (Fig. 1, Fig. 2), durch die sie erzeugt werden, bezeichnet.

Das zu klassifizierende Originalbild gemäß Fig. 5.O stellt ein in die gelernte Klasse fallendes Fraktal dar, das jedoch als Anomalität das Wort "Anomaly" enthält. Fig. 5.SH stellt bereits die Superhypothese dar, aus welcher in einfacher Weise, wie im Zusammenhang mit Fig. 4 beschrieben, das Ergebnis R berechnet werden kann. Es ist offensichtlich, daß die Flächenanteile und damit auch die Anzahl der Normalitäten mit einem geringen Wert (bei der Darstellung als Bild die Anzahl der dunklen Bildelemente) deutlich die Anteile weiterer über das Bild verteilter Normalitäten mit einem geringen Wert übersteigen.

Diese weiteren auf dem Bild verstreuten Normalitäten mit kleineren Werten entstehen im wesentlichen durch einen nicht vollständigen Lernvorgang. Bei der praktischen Durchführung des Verfahrens wird aus ökonomischen Gründen der Lernvorgang nicht soweit getrieben werden, daß alle nur denkbaren zu klassifizierenden Bilder mit allen Normalitäten den Maximalwert erreichen. Entsprechend ist der Schwellwert bei 30 (Fig. 4) zu setzen.

Sollte es zweckmäßig sein, so können zur weiteren Auswertung der Superhypothese auch andere bekannte Bildverarbeitungsverfahren herangezogen werden, die beispielsweise vereinzelt auftretende Normalitäten mit geringerem Wert (einzelne schwarze Punkte in Fig. 5.SH) unterdrücken und nur größere Anhäufungen berücksichtigen.

Wie aus den Bildern Fig. 5.0 und Fig. 5.SH hervorgeht, fällt die Anomalität innerhalb der Superhypothese dem Betrachter wesentlich stärker auf als im Originalbild. Deshalb wird in diesem Zusammenhang darauf hingewiesen, daß je nach Anwendungsfall im einzelnen das erfindungsgemäße Verfahren bereits mit der Bildung einer oder mehrerer Hypothesen oder der Superhypothese vorteilhaft anwendbar ist. Einerseits können beispielsweise bei wissenschaftlichen Untersuchungen Anomalitäten eines Bildes leicht beobachtet werden, ohne daß eine vollautomatische Klassifizierung erfolgt. Andererseits ist die Betrachtung von "Zwischenbildern" bei typischen Automatisierungsanwendungen allenfalls beim Lernvorgang oder in einer auf den Lernvorgang erforderlichen Erprobungsphase vorgesehen, während man beim regulären Betrieb eine vollautomatische Klassifikation vorziehen wird.

Die Bilder Fig. 5.MM1 bis MM4 zeigen die Ergebnisse der Mittelwertbildung in den Kanälen K1 bis K4 mit verschieden großen Proben. Je größer die Proben sind, umso mehr werden Details ausgemittelt. Ähnliches gilt für Details des Fraktals bei der Aktivität, die in den Bildern MA1 bis MA4 dargestellt ist. Mit zunehmender Probengröße gleichen sich die einzelnen Werte der Aktivität an. Für die Proben, an denen Bildelemente der Anomalität beteiligt sind, ergeben sich hohe Aktivitätswerte.

Die Bilder MG1 bis MG4 werden aus den Beträgen der Gradienten gebildet. Bei den kleinen Proben in Kanal K1 (Bild MG1) tritt der Schriftzug deutlich hervor, während größer werdende Proben wenig zur Differenzierung zwischen dem Schriftzug und dem Fraktal beitragen.

Die einzelnen Merkmale, die in den Bildern MM1 bis MM4, MA1 bis MA4 und MG1 bis MG4 dargestellt sind, bilden in jedem Kanal bildelementweise eine Adresse, mit der aus der Tabelle jeweils ein Normalitätswert ausgelesen wird, wodurch die in den Bildern H1 bis H4 dargestellten Hypothesen entstehen. Als Folge des vorangegangenen Lernvorgangs weisen die Bilder H1 bis H4 an den Stellen, deren Inhalt ausschließlich durch das Fraktal bestimmt ist, weitgehend weiße Bildelemente auf, das heißt, maximale Normalitäten. Da die Anomalität nicht gelernt ist, führt sie zu schwarzen Bildelementen, das heißt, zu geringen Normalitäten.

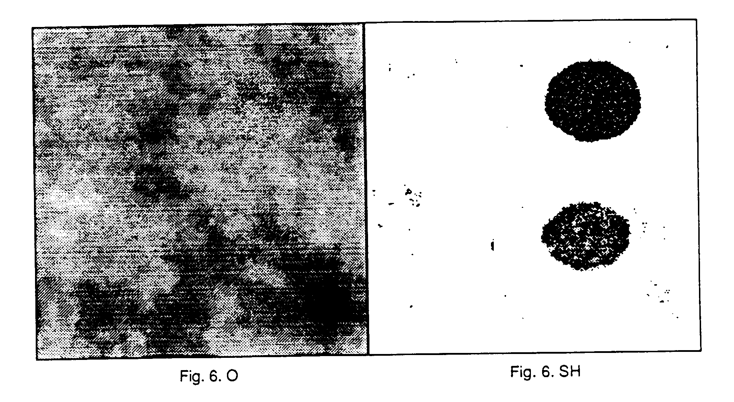

Das in Fig. 6.O und Fig. 6.SH dargestellte Beispiel geht ebenfalls von einem Originalbild aus, das ein Fraktal darstellt, welchem jedoch an zwei Stellen Rauschen überlagert ist. Aus der in Fig. 6.SH dargestellten Superhypothese geht hervor, daß für die ungestörten Bildbereiche die verknüpften Normalitätswerte hoch und für die gestörten Bildbereiche niedrig sind. Durch die im Zusammenhang mit Fig. 4 dargestellte Berechnung eines Entscheidungswertes und den anschließenden Vergleich mit einem Schwellwert kann auch hier das Vorliegen einer Störung bzw. Anomalität leicht ermittelt werden.

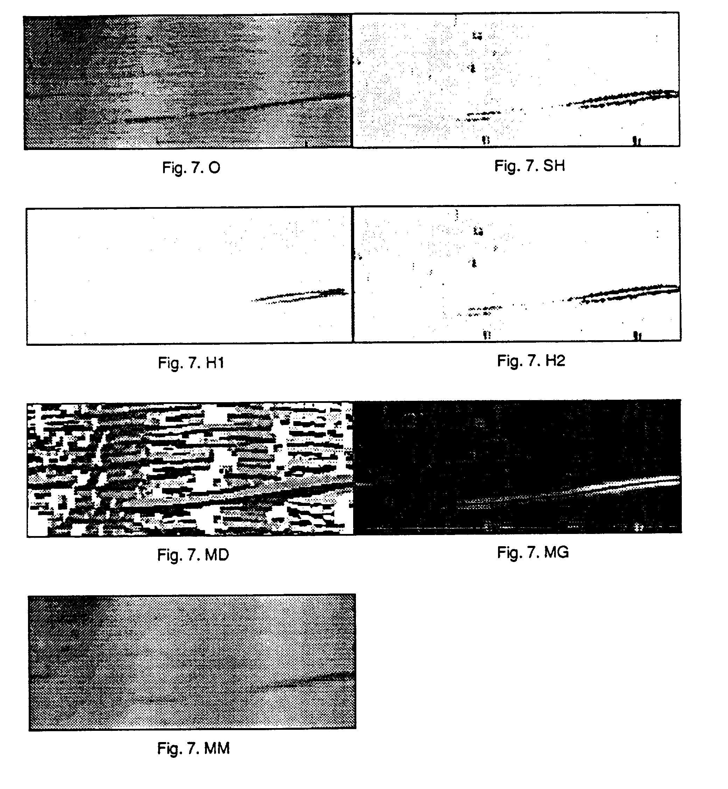

Anhand von Fig. 7 wird ein erfolgreich in der industriellen Qualitätskontrolle angewandtes Ausführungsbeispiel des erfindungsgemäßen Verfahrens erläutert. Es werden Bilder von metallischen Oberflächen untersucht und in die Klassen "gut" oder "schlecht" klassifiziert, nachdem ein Satz von 100 guten Bildern trainiert worden ist. Bei diesem Ausführungsbeispiel werden zwei Kanäle verwendet. Jedes Originalbild (Fig. 7.O) wird an die beiden Kanäle verteilt und dort ohne Filterung in vollüberlappende Muster der Größe 6 x 6 Bildpunkte zerlegt.

Kanal 1 extrahiert aus diesen Mustern die beiden Merkmale "Mustermittelwert" (Fig. 7.MM) und "Gradientenbetrag" (Fig. 7.MG). Die Werte jedes dieser Merkmale liegen in dem Bereich zwischen 0% und einem Maximalwert (100%). In der Merkmalsquantisierung wird der Gradientenbetrag in einem Bereich zwischen 0% und 6% des Maximalwertes mit 8 Bit (256 Stufen) linear quantisiert. Der Mittelwert wird im Bereich zwischen 0% und 45% mit 8 Bit linear quantisiert. Merkmalswerte, die größer als die obere Bereichsgrenze sind, werden der obersten Quantisierungsstufe zugeordnet. Aus den quantisierten Merkmalswerten wird durch Aneinanderhängen ein Merkmalsvektor der Länge 16 Bit erzeugt, der die Normalitätstabelle des Kanals adressiert.

Kanal 2 extrahiert aus den Mustern die beiden Merkmale "Gradientenbetrag" (Fig. 7.MG) und "Gradientenrichtung" (Fig. 7.MD). Die Richtung wird im gesamten Wertebereich von 0° bis 360° mit 8 Bit linear quantisiert, während der Betrag wie bei Kanal 1 nur im Bereich von 0% bis 6% mit 8 Bit linear quantisiert wird. Der entstehende Merkmalsvektor wird wiederum zur Adressierung der Normalitätstabelle des Kanals verwendet.

Die auf diese Weise erzeugten Ranghypothesen (Fig. 7.H1 und 7.H2) ergeben durch Mittelung die Superhypothese (Fig. 7.SH), aus deren mittlerem Normalitätswert die Entscheidungsgröße berechnet wird. Liegt die Entscheidungsgröße oberhalb einer zuvor festgelegten Schwelle, so wird das Eingangsbild als "gut", sonst als "schlecht" klassifiziert.

## Patentansprüche

1. Verfahren zur Klassifikation von Signalen, welche jeweils einen von mehreren möglichen Amplitudenverläufen von aufgenommenen Signalen darstellen, wobei folgende Verarbeitungsschritte in einem Kanal (K1) oder in mehreren Kanälen (K1-K32) parallel erfolgen:
- aus jeweils mehreren zusammenhängenden Abtastwerten werden mehrere Proben (P) gebildet,
- aus jeder Probe wird mindestens ein Merkmal (MM, MA, MG, MD) extrahiert,
- das Merkmal bzw. die Merkmale (MM, MA, MG, MD) jeder Probe werden als Adressen (MV+Z) verwendet, um aus einer Tabelle (T) gespeicherte Auftrittswahrscheinlichkeiten auszulesen; zur weiteren Auswertung wird aus den Auftrittswahrscheinlichkeiten aller Proben eine Entscheidungsgröße berechnet und mit einem Schwellwert verglichen.

2. Verfahren nach Anspruch 1, dadurch gekennzeichnet, daß bei der Verwendung von mehreren Kanälen (K1-K32) vor der weiteren Auswertung die aus den Tabellen aller Kanäle ausgelesenen Auftrittswahrscheinlichkeiten miteinander verknüpft werden.

3. Verfahren nach Anspruch 1, dadurch gekennzeichnet, daß die Proben um a Abtastperioden gegeneinander versetzt sind, wobei a zwischen 1 und der Anzahl der zeitlich aufeinander folgenden zu einer Probe gehörenden Abtastwerte liegt.

4. Verfahren nach Anspruch 1, dadurch gekennzeichnet, daß jeweils in einem Kanal (K1-K32) mehrere Merkmale (MM, MA, MG, MD) extrahiert werden, die gemeinsam eine Adresse (MV+Z) für die Tabelle (T) bilden.

5. Verfahren nach Anspruch 1, dadurch gekennzeichnet, daß die Adresse (MV+Z) ferner eine Zusatzinformation (Z) enthält, die nicht durch Extrahieren von Merkmalen aus der Probe gewonnen wurde.

6. Verfahren nach Anspruch 5, dadurch gekennzeichnet, daß die Zusatzinformation (Z) Angaben über die Kombination und/oder Bewertung der in der gleichen Adresse enthaltenen Merkmale umfaßt.

7. Verfahren nach Anspruch 5, dadurch gekennzeichnet, daß die Zusatzinformation (Z) Angaben über Umstände bei der Erzeugung der Signale umfaßt.

8. Verfahren nach Anspruch 5, dadurch gekennzeichnet, daß die Zusatzinformation (Z) Angaben über den inneren Zustand des Klassifikators enthält.

9. Verfahren nach Anspruch 5, dadurch gekennzeichnet, daß die Zusatzinformation (Z) aus nachfolgenden Verarbeitungsschritten gewonnen wird.

10. Verfahren nach Anspruch 2, dadurch gekennzeichnet, daß in den einzelnen Kanälen (K1-K32) die Verarbeitung mit verschieden großen Proben und/oder mit der Extraktion unterschiedlicher Merkmale (MM, MA, MG, MD) erfolgt.

11. Verfahren nach Anspruch 2, dadurch gekennzeichnet, daß zur Verknüpfung der aus den Tabellen (T) ausgelesenen Auftrittswahrscheinlichkeiten zunächst die jeweils aus den Merkmalen zeitlich oder örtlich korrespondierender Proben gewonnenen Auftrittswahrscheinlichkeiten verschiedener Kanäle miteinander verknüpft werden und daß aus allen verknüpften Auftrittswahrscheinlichkeiten eine Entscheidungsgröße berechnet wird, die mit einem Schwellwert verglichen wird.

12. Verfahren nach Anspruch 1, dadurch gekennzeichnet, daß für jeweils eine Klasse eine der Anzahl der Kanäle entsprechende Anzahl von Tabellen (T) vorgesehen ist.

13. Verfahren nach Anspruch 1, dadurch gekennzeichnet, daß die Signale vor der Merkmalsextraktion gefiltert werden.

14. Verfahren nach Anspruch 1, dadurch gekennzeichnet, daß die aus der Tabelle (T) ausgelesenen Auftrittswahrscheinlichkeiten gefiltert weden.

15. Verfahren nach Anspruch 1, wobei die Abtastwerte Eigenschaften, wie Grauwert, gegebenenfalls Farbe, von Bildelementen eines Bildes darstellen, dadurch gekennzeichnet, daß eine Probe jeweils m x n Bildelemente umfaßt und daß die Proben zeilenweise fortschreitend entnommen werden, wobei der Versatz von einer Probe auf die folgende in Zeilenrichtung zwischen einem und m Bildelementen und der Versatz senkrecht zur Zeilenrichtung zwischen 1 und n Bildelementen liegt.

16. Verfahren nach Anspruch 15, dadurch gekennzeichnet, daß m = n ist.

17. Verfahren nach Anspruch 15, dadurch gekennzeichnet, daß eines oder mehrere der folgenden Merkmale aus jeweils einer Probe extrahiert werden: Mittelwert (MM), Aktivität als Summe der Absolutwerte der Differenzen zwischen allen zu der Probe gehörenden unmittelbar benachbaren Abtastwerten (MA), Momente, Gradient nach Betrag und Richtung (MG, MD), Texturen, Varianzen, fraktale Dimensionen, Ableitungen, relative und/oder absolute Positionen der Probe, zeitliche und/oder örtliche Kombinationen, beispielsweise Differenzen, mit mindestens einer anderen Probe.

18. Verfahren nach Anspruch 15, dadurch gekennzeichnet, daß die Merkmale zur Bildung der jeweiligen Adresse (MV+Z) skaliert und/oder quantisiert (QM, QA, AG, QD) werden.

19. Verfahren nach Anspruch 18, dadurch gekennzeichnet, daß die Adresse zusätzlich zu einem oder mehreren skalierten und/oder quantisierten Merkmalen Zusatzinformationen (Z) umfaßt.

20. Verfahren nach Anspruch 19, dadurch gekennzeichnet, daß die Zusatzinformation (Z) eine Angabe über den Ort der jeweiligen Probe innerhalb des Bildes enthält.

21. Verfahren nach Anspruch 1, dadurch gekennzeichnet, daß in einem Lernvorgang Signale zugeführt werden, die in die jeweils zu lernende Klasse fallen, und daß folgende Verarbeitungsschritte in einem Kanal oder in mehreren Kanälen (K1-K52) parallel erfolgen:
- aus jeweils mehreren Abtastwerten werden Proben gebildet,
- aus jeder Probe wird mindestens ein Merkmal (MM, MA, MG, MD) extrahiert,
- das Merkmal bzw. die Merkmale (MM, MA, MG, MD) weden als Adressen (MV+Z) verwendet, um beim Auftreten eines Merkmals einen zuvor unter der dem Merkmal entsprechenden Adresse abgelegten Wert zu inkrementieren.

22. Verfahren nach Anspruch 21, dadurch gekennzeichnet, daß eine nichtlineare Bewertung der Häufigkeitsverteilung erfolgt.

23. Verfahren nach Anspruch 21, dadurch gekennzeichnet, daß bei der Inkrementierung Merkmale weiterer Proben berücksichtigt werden.

24. Verfahren nach Anspruch 2, dadurch gekennzeichnet, daß die aus der Tabelle (T) ausgelesenen und/oder die verknüpften Auftrittswahrscheinlichkeiten auf einem Bildschirm dargestellt werden.

## Claims

1. Method for the classification of signals which in each case represent one of a number of possible amplitude variations of recorded signals, the following processing steps being performed in one channel (K1) or in parallel in a number of channels (K1-K32) :
- a number of specimens (P) are formed from in each case a number of contiguous samples,
- from each specimen, at least one characteristic (MM, MA, MG, MD) is extracted,
- the characteristic or the characteristics, respectively (MM, MA, MG, MD) of each specimen are used as addresses (MV+Z) in order to read stored occurrence probabilities out of a table (T); for the further analysis, a decision variable is calculated from the occurrence probabilities of all specimens and is compared with a threshold value.

2. Method according to Claim 1, characterized in that, when a number of channels (K1-K32) are used, the occurrence probabilities read out of the tables of all channels are logically combined with one another before the further analysis.

3. Method according to Claim 1, characterized in that the specimens are offset from one another by a sample periods, a being located between 1 and the number of temporally successive samples belonging to one specimen.

4. Method according to Claim 1, characterized in that in each case in one channel (K1-K32) a number of characteristics (MM, MA, MG, MD) are extracted which jointly form an address (MV+Z) for the table (T).

5. Method according to Claim 1, characterized in that the address (MV+Z) also contains additional information (Z) which was not obtained by extracting characteristics from the specimen.

6. Method according to Claim 5, characterized in that the additional information (Z) comprises information on the combination and/or the evaluation of the characteristics obtained in the same address.

7. Method according to Claim 5, characterized in that the additional information (Z) comprises information on circumstances during the generation of the signals.

8. Method according to Claim 5, characterized in that the additional information (Z) contains information on the internal state of the classifier.

9. Method according to Claim 5, characterized in that the additional information (Z) is obtained from subsequent processing steps.

10. Method according to Claim 2, characterized in that in the individual channels (K1-K32), the processing is performed with specimens of different sizes and/or with the extraction of different characteristics (MM, MA, MG, MD).

11. Method according to Claim 2, characterized in that for the purpose of logically combining the occurrence probabilities read out of the tables (T), first the occurrence probabilities of various channels, obtained in each case from the characteristics of temporally or locally corresponding specimens, are logically combined with one another and in that from all logically combined occurrence probabilities, a decision variable is calculated which is compared with a threshold value.

12. Method according to Claim 1, characterized in that a number of tables (T) corresponding to the number of channels is provided for in each case one class.

13. Method according to Claim 1, characterized in that the signals are filtered before the extraction of characteristics.

14. Method according to Claim 1, characterized in that the occurrence probabilities read out of the table (T) are filtered.

15. Method according to Claim 1, wherein the samples represent properties such as grey-scale value, and possibly colour, of picture elements of a picture, characterized in that a specimen in each case comprises m x n picture elements and in that the specimens are taken progressively line by line, wherein the offset from one specimen to the next is located between one and m picture elements in the line direction and the offset perpendicularly to the line direction is located between 1 and n picture elements.

16. Method according to Claim 15, characterized in that m = n.

17. Method according to Claim 15, characterized in that one or more of the following characteristics are extracted from in each case one specimen: mean value (MM), activity as the sum of the absolute values of the differences between all directly adjacent samples (MA) belonging to the specimen, moments, gradient according to absolute value and direction (MG, MD), textures, variances, fractal dimensions, derivations, relative and/or absolute positions of the specimen, temporal and/or local combinations, for example differences, with at least one other specimen.

18. Method according to Claim 15, characterized in that the characteristics for forming the respective address (MV+Z) are scaled and/or quantized (QM, QA, AG, QD).

19. Method according to Claim 18, characterized in that the address comprises additional information (Z) in addition to one or more scaled and/or quantized characteristics.

20. Method according to Claim 19, characterized in that the additional information (Z) contains information on the location of the respective specimen within the picture.

21. Method according to Claim 1, characterized in that, in a learning process, signals are supplied which fall into the class to be learnt in each case and in that the following processing steps are performed in one channel or in parallel in a number of channels (K1-K52):
- specimens are formed from in each case a number of samples,
- from each specimen, at least one characteristic (MM, MA, MG, MD) is extracted,
- the characteristic or the characteristics, respectively (MM, MA, MG, MD) are used as addresses (MV+Z) in order to increment a value previously stored under the address corresponding to the characteristic when a characteristic occurs.

22. Method according to Claim 21, characterized in that a non-linear evaluation of the frequency distribution is performed.

23. Method according to Claim 21, characterized in that the characteristics of further specimens are taken into consideration during the incrementation.

24. Method according to Claim 2, characterized in that the occurrence probabilities read out of the table (T) and/or the occurrence probabilities logically combined are displayed on a screen.

## Revendications

1. Procédé de classement de signaux représenté chaque fois un de plusieurs tracés d'amplitude possibles de signaux reçus par les étapes de traitement suivantes se faisant dans un canal (K1) ou en parallèle dans plusieurs canaux (K1-K32) :
- à partir de chaque fois plusieurs valeurs de détection cohérentes, on forme plusieurs échantillons (P),
- on extrait au moins une caractéristique (MM, MA, MG, MD) de chaque échantillon,
- on utilise la ou les caractéristiques (MM, MA, MG, MD) de chaque échantillon comme des adresses (MV+Z) pour extraire des probabilités d'occurrence mises en mémoire dans un tableau (T) ; pour la suite de l'exploitation, à partir des probabilités d'occurrence de tous les échantillons, on calcule une grandeur de décision et on la compare à un seuil.

2. Procédé selon la revendication 1,
caractérisé en ce que
lorsqu'on utilise plusieurs canaux (K1-K32), avant l'exploitation ultérieure, on combine entre elles les probabilités d'occurrence de tous les canaux lus dans les tableaux.

3. Procédé selon la revendication 1,
caractérisé en ce qu'
on décale les échantillons d'une période de détection (a), (a) étant compris entre 1 et le nombre de valeurs de détection successives dans le temps et appartenant à un échantillon.

4. Procédé selon la revendication 1,
caractérisé en ce que
chaque fois dans un canal (K1-K32), on extrait plusieurs caractéristiques (MM, MA, MG, MD) qui forment en commun une adresse (MV+Z) pour le tableau (T).

5. Procédé selon la revendication 1,
caractérisé en ce que
l'adresse (MV+Z) contient en outre une information complémentaire (Z) qui a été obtenue de l'échantillon non par l'extraction de caractéristiques.

6. Procédé selon la revendication 5,
caractérisé en ce que
l'information complémentaire (Z) contient des indications relatives à la combinaison et/ou l'exploitation des caractéristiques de la même adresse.

7. Procédé selon la revendication 5,
caractérisé en ce que
l'information complémentaire (Z) contient des indications relatives aux circonstances correspondant à la génération des signaux.

8. Procédé selon la revendication 5,
caractérisé en ce que
l'information complémentaire (Z) contient des indications relatives à l'état interne de l'élément de classement.

9. Procédé selon la revendication 5,
caractérisé en ce que
l'information complémentaire (Z) s'obtient à partir des étapes de traitement suivantes.

10. Procédé selon la revendication 2,
caractérisé en ce que
dans les différents canaux (K1-K32), on traite des échantillons de tailles différentes et/ou ayant des caractéristiques d'extraction différentes (MM, MA, MG, MD).

11. Procédé selon la revendication 2,
caractérisé en ce que
pour combiner les probabilités d'occurrence lues dans les tableaux (T), on combine tout d'abord entre elles les probabilités d'occurrence des différents canaux obtenus à partir des caractéristiques d'échantillon correspondant dans le temps ou dans l'espace, et on compare ces grandeurs de décision à un seuil.

12. Procédé selon la revendication 1,
caractérisé en ce que
pour chaque classe, on prévoit un nombre de canaux correspondant au nombre de tableaux (T).

13. Procédé selon la revendication 1,
caractérisé en ce qu'
on filtre les signaux avant d'extraire les caractéristiques.

14. Procédé selon la revendication 1,
caractérisé en ce qu'
on filtre les probabilités d'occurrence lues dans le tableau (T).

15. Procédé selon la revendication 1, selon lequel les valeurs de détection des propriétés telles que le niveau de gris, le cas échéant la couleur représentent des éléments d'une image,
caractérisé en ce qu'
un échantillon contient chaque fois (m x n) éléments image et les échantillons sont extraits en continu ligne par ligne, le décalage d'un échantillon au suivant, dans la direction de la ligne se situant entre 1 et (m) éléments image et le décalage perpendiculaire à la direction des lignes est compris entre 1 et (n) éléments image.

16. Procédé selon la revendication 15,
caractérisé en ce que
m = n.

17. Procédé selon la revendication 15,
caractérisé en ce qu'
on extrait de chaque échantillon une ou plusieurs des caractéristiques suivantes : valeur moyenne (MM), activité comme somme des valeurs absolues des différences entre toutes les valeurs de décision (MA), directement voisines appartenant à un échantillon, le couple, le gradient en amplitude et en direction (MG, MD), des textures, les variances, les dimensions fractales, les dérivés, des positions relatives et/ou absolues de l'échantillon, les combinaisons chronologiques et/ou d'espace, par exemple des différences avec au moins un autre échantillon.

18. Procédé selon la revendication 15,
caractérisé en ce que
les caractéristiques pour former l'adresse respective (MV+Z) sont mises en mode scalaire et/ou quantifiées (QM, QA, AG, QD).

19. Procédé selon la revendication 18,
caractérisé en ce que
l'adresse comprend plus d'une ou plusieurs caractéristiques à mettre au niveau scalaire et/ou à quantifier, des informations complémentaires (Z).

20. Procédé selon la revendication 19,
caractérisé en ce que
l'information complémentaire (Z) contient une indication relative à l'emplacement de l'échantillon respectif dans l'image.

21. Procédé selon la revendication 1,
caractérisé en ce qu'
on fournit les signaux dans une opération d'apprentissage qui tombent chaque fois dans la classe à apprentir et on effectue les étapes de travail suivantes dans un canal ou en parallèle dans plusieurs canaux (K1-K52) :
- on forme des échantillons chaque fois à partir de plusieurs valeurs de détection,
- on extrait une caractéristique (MM, MA, MG, MD) à partir de chaque échantillon,
- on utilise la ou les caractéristiques (MM, MA, MG, MD) comme des adresses (MV+Z), pour qu'à l'occurrence d'une caractéristique, on incrémente une valeur enregistrée préalablement à l'adresse correspondant à la caractéristique.

22. Procédé selon la revendication 21,
caractérisé en ce qu'
on effectue une exploitation non linéaire de la fréquence de répartition.

23. Procédé selon la revendication 21,
caractérisé en ce qu'
on tient compte de caractéristiques d'autres échantillons lors de l'incrémentation.

24. Procédé selon la revendication 2,
caractérisé en ce qu'
on affiche les probabilités d'occurrence lues dans le tableau (T) et/ou obtenues par combinaison, sur un écran image.
